Europäisches Patentamt

European Patent Office

Office européen des brevets

(11) Publication number: 0 513 957 A1

# EUROPEAN PATENT APPLICATION

(21) Application number: 92300197.8

(22) Date of filing: 09.01.92

(51) Int. Cl.5: F01D 25/18, F16N 39/00, F16N 7/40

(30) Priority: 13.05.91 US 699093

(43) Date of publication of application:
19.11.92 Bulletin 92/47

(84) Designated Contracting States:
DE FR GB IT

(71) Applicant: GENERAL ELECTRIC COMPANY
1 River Road
Schenectady, NY 12345(US)

(72) Inventor: Greenwald, Edmund William
10209 Winstead Lane
Cincinnati, Ohio 45231(US)

(74) Representative: Pratt, Richard Wilson et al
London Patent Operation G.E. Technical
Services Co. Inc. Essex House 12/13 Essex
Street
London WC2R 3AA(GB)

(54) Scavenge air removal and bypass system and method of operation.

(57) In an axial flow gas turbine engine, a scavenge air removal and bypass system and method of operation that reduces the operational pressure of a lube oil system is provided. An air-oil mixture is created by a mixing action of lube oil and air in bearings, seals, and gears located in various parts of a gas turbine engine which is collected by one or more sumps located throughout the lube oil system. Scavenge pumps (45) transfer the air-oil mixture to an air-oil separator (50) where solid oil (70) ischarge air (95) are returned to a lube oil tank (22) through separate lines. The discharge air pressurizes the lube oil system to accomplish normal operation. By providing separate return lines for the solid oil and the discharge air, the lube oil system pressure required to operate is reduced.

FIGURE 1

The Government has rights in this invention pursuant to Contract No. F33657-83-C-0281 awarded by the Department of Air Force.

## BACKGROUND OF THE INVENTION

Field of the Invention:

This invention relates, in general, to gas turbine engines and, more particularly, to such engines that include a lube oil system in which air and oil become mixed during operation and the air is used to pressurize the lube oil system.

Description of the Prior Art:

Scavenge oil systems used in gas turbine engines comprise sumps, scavenge oil pumps, and a lube oil tank. Oil is supplied to various areas of the gas turbine engine including gearboxes and other areas that need constant lubrication. Oil, after it is used to lubricate the various systems, drips down and is collected in a sump area. A sump is a low spot where gravity causes the oil to collect where it can be pumped back into an oil tank, sometimes referred to as a lube oil tank, for re-distribution to the system. During the process of collection and during the process of lubricating, oil becomes mixed with air and become frothy and bubbly thereby increasing in volume. The air that is mixed with the oil causes pressure to develop in the lube oil system. In conventional systems, the pressure that develops is very high. To be able to accommodate this high pressure, a heavy and large oil line is required to conduct lube oil throughout the system.

The air that is mixed with the oil during operation is returned to the lube oil tank along with the oil where the air is separated from lube oil. The air is at an increased pressure and used as a pressurizing source for the lube oil tank. In some lube oil systems, the oil that is returned is very hot. In more modern systems, an oil cooler is incorporated to reduce the system oil temperature. Hot tank systems incorporate the oil cooler in the oil supply line, which allows the oil in the lube oil tank to be hot while still supplying cooler oil to the system. Cool tank systems incorporate an oil cooler in the lube oil return line which results in lower lube oil tank temperatures. Additionally, some engines, for example high performance engines, incorporate a lube debris monitor. This device is used to count metal particles that are picked up by the lube oil system and are counted to indicate wear and tear on the engine and indicate a possible need for maintenance. As a consequence of separating the metal chips to be counted, the air is also separated from the oil. Traditionally, after counting the metal chips, the oil and the air are returned to the lube oil tank through the same oil line. In all systems, the lube oil tank has some method of separating the air from the oil so that the deaerated oil, or as it is sometimes called, solid oil, is supplied to the lube oil system. One problem that results from using this type of system is the extremely high pressures that can develop in the lube oil return line which increases the probability of oil loss around gaskets and which require larger, heavier oil pipes to accommodate the increased pressure.

The present invention separates the air and the oil and returns the air and the oil to the lube oil tank separately. The air is returned to pressurize the lube oil system to promote oil flow. An unexpected result occurs; the system pressure is greatly reduced. The size and weight of the return line and oil cooler is reduced. Reliability is improved because there is less likelihood of oil loss due to gasket failure. The benefits of the present invention are achieved without adding anything to the system.

Accordingly, it is an object of this invention to provide scavenge air removal and bypass system for a gas turbine engine which separates the scavenge air from the scavenge oil and returns the scavenge air to the lube oil tank through a circuit separate from the oil, thereby reducing the size, the weight, and the pressure of the lube oil system.

## SUMMARY OF THE INVENTION

In carrying out this invention in one form thereof, a method of pressurizing a lube oil system is provided for a gas turbine engine which includes the steps of providing one or more sumps for collecting lube oil that is mixed with air, providing a lube oil tank for supplying lube oil to bearings and other areas used in a gas turbine engine, separating air from the lube oil, cooling collected lube oil, returning the cooled lube oil to the lube oil tank, and controllably pressurizing the lube oil tank with the air through a separate return passage. The lube oil system consists of one or more oil sumps, one or more scavenge pumps, an oil cooler, an oil-air separator, and a lube oil tank. Also, included are pressurizing valves that keep the lube oil tank pressure within set limits.

A method of reducing pressure in a lube oil system includes transferring lube oil from the lube oil tank is supplied to the engine gearbox and to other areas of the gas turbine engine requiring lubrication. Each of the systems has a sump that collects the oil after it has been used to lubricate bearings, gears, and other various parts of the engine and is pumped via scavenge pumps to a single oil return line. The oil in the oil return line is unintentionally mixed with air that has leaked in through oil seals and has been incorporated in the oil by mixing action in the bearings and gears. The air-oil mixture then enters through a tangential inlet into a lube debris monitor. This system causes the oil to rotate circumferentially causing the heavy mass of oil and debris trapped inside the oil to migrate to the interior surface of the lube debris monitor and causes the air to collect in the center. A port in the center, called an air discharge port, is provided to remove the air from the oil. A lube debris monitor probe collects and counts metal particles as the oil discharges from the lube debris monitor. The oil that has been deaerated, now called solid oil, enters an oil cooler. The oil cooler, as its name implies, reduces the temperature of the oil. The oil is hot due to churning heat generated in the gearbox and throughout the system. After being cooled, the solid oil returns to the lube tank. The air that was separated from the oil in the lube debris monitor and extracted through the air discharge port in the lube debris monitor is also returned to the lube oil tank to pressurize the lube oil tank through an air bypass line. Included in the lube oil tank is a pressurizing valve that controls the pressure of the tank. When the pressure in the lube oil tank exceeds the pressure set on the pressurizing valve, the excess air is bled off and transferred to the gearbox where the excess air in the gearbox is jettisoned overboard.

The unexpected advantage of the present system is that the system pressure is reduced which reduces weight because the size of the air lines, the oil lines, and the oil cooler is less, which is very beneficial in any aircraft engine application. Additionally, because the system pressure required in the sump return lines is reduced, the stress on the scavenge pumps is reduced, which extends pump life and improves reliability.

In high performance applications, maneuvering occurs during flight, which causes transient pressure spikes throughout the system. Transient maneuvers cause oil puddling to occur in the sumps because the maneuvers, hard turns, inverted flight, and high G forces, prevent the continuous collection of engine oil. When puddling occurs and the aircraft suddenly rights itself, there is a sudden surge of oil in the system which can cause pressure spikes in the lube oil system. The present invention has a greatly reduced normal lube oil pressure. The air is separated from the lube oil and returned to the lube oil tank through its own line. This system can easily tolerate pressure transients in the lube oil system because its normal pressure is lower than the pressure in present lube oil systems. The result is a gas turbine engine that is more reliable throughout the total flight envelope of the aircraft.

## BRIEF DESCRIPTION OF THE DRAWINGS

The novel features of the invention are set forth with particularity in the appended claims. The invention itself, however, both as to organization and method of operation, together with further objects and advantages thereof may best be understood with reference to the following description taken in conjunction with the accompanying drawings in which:

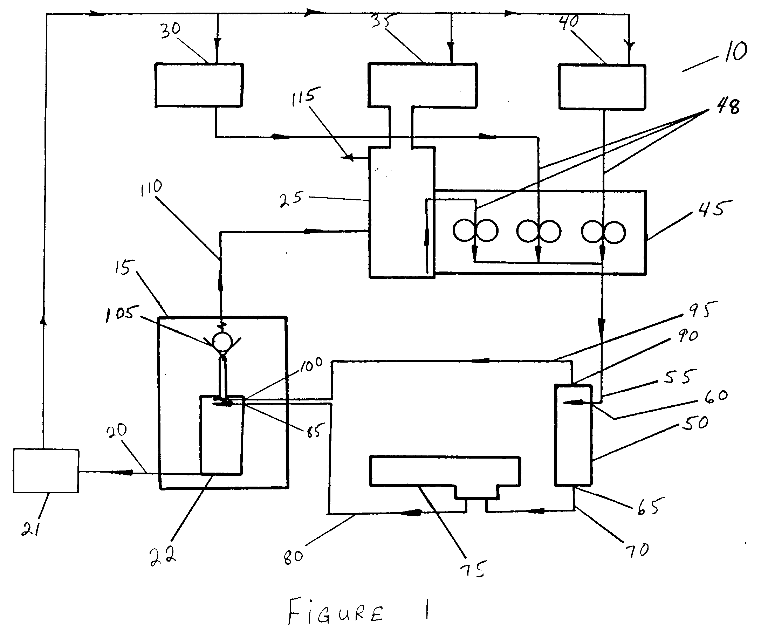

FIGURE 1 is a block diagram of a scavenge air removal and bypass systems in accordance with the present invention.

## DESCRIPTION OF THE PREFERRED EMBODIMENT

Figure 1 is a schematic illustration of a scavenge air removal and bypass system 10 having a lube oil tank 15, a gearbox 25, one or more sumps, 30, 35, and 40, respectively, a scavenge pump 45, a lube debris monitor 50, and an oil cooler 75. A gas turbine engine 21, in block form, requires lube oil for various parts of the engine and lube oil supply line 20 provides lube oil to all parts of the engine requiring lubrication. As the oil is being used to lubricate various parts of the gas turbine engine, the oil drips down over the parts being lubricated and collects in one or more sumps. In usual practice, there is forward sump 30, mid sump 35 that collects the oil from the engine gearbox 25, and aft sump 40. Scavenge pump 45 has as many stages as there are sumps and pumps the oil from each of the sumps to a lube debris monitor 50 through input line 55. The scavenge oil, as it is now called, enters lube debris monitor 50 through tangential inlet 60. Tangential inlet 60 forces the oil to enters lube debris monitor 50 at a tangential angle that causes the oil-air mixture to swirl around the interior surface of lube debris monitor 50. Scavenge oil that enters lube debris monitor 50, is forced by centrifugal force to collect on the interior surface along with other particles that are trapped in the oil thereby causing the air and oil to separate. Lube debris monitor 50 counts the number of metal particles that have been collected in the oil which indicates engine wear. As the separated oil exits lube debris monitor 50 at discharge port 65, it is solid oil and is free of all metal particles and air. Deaerated scavenge oil line 70 transfers the solid oil to oil cooler 75 where the oil temperature increase developed during the lubrication process, is reduced. Cooled scavenge oil line 80 transfers the cooled solid oil to lube oil tank 15 through scavenge oil return port 85.

The separated air exits lube debris monitor 50 through air discharge port 90. Air discharge line 95 transfers the scavenge air to lube oil tank 15. The air enters lube oil tank 15 at bypass air return port 100 and thereby pressurizes lube oil tank 15. In the event that the air pressure is too high, pressurizing valve 105 in lube oil tank 15 opens to remove excess air. Pressurizing valve 105 is set at a predetermined pressure to prevent damage to the lube oil system. Any excess air is transferred to gearbox 25 through excess air line 110 where it is then jettisoned overboard through air discharge port 115.

Air enters the lube oil system, in general, through air/oil seals (not shown) and is unintentionally mixed into the oil through the gearing and churning action of the various systems of the gas turbine engine. Separating the air and the oil and returning them to the lube oil tank separately causes the unexpected result of the lube oil pressure in the system to be considerably lower which allows a smaller oil line and air line because the strength required to maintain the pressure is not as great. Also, gaskets around various connections are under less stress, which increases reliability of the engine system. One major problem in gas turbine engines for use in high performance aircraft occurs during what are termed transient maneuvers. These maneuvers occur when an aircraft executes high banks, high climbs, steep dives, turns and rolls which cause the oil to puddle and not be collected in the sump. At a later point in the flight of the aircraft, there is a sudden pressure surge in the oil system when the aircraft rights itself. By having a lower operating pressure in the lube oil system, any pressure transient is more easily tolerated by various system components which increases the reliability of the engine and prevents catastrophic failures during flight.

While preferred embodiments of the present invention have been shown and described herein, it will be obvious to those skilled in the art that such embodiments are provided by way of example only. Numerous variations, changes, and substitutions will now occur to those skilled in the art without departing from the invention. Accordingly, it is intended that the invention be limited only by the spirit and scope of the appended claims.

**Claims**

1. A method of reducing pressure in a lube oil system in a gas turbine engine having a lube oil tank, a sump, a scavenge pump, and an air-oil separator, comprising the steps of:
   collecting an air-oil mixture in one or more sumps;
   pumping said air-oil mixture from said one or more sumps to an air-oil separator;
   separating said air-oil mixture into solid oil and discharge air;
   returning said solid oil to said lube oil tank; and
   returning said discharge air to said lube oil tank.

2. A method of reducing pressure in a lube oil system as described in claim 1 wherein said step of separating said air-oil mixture is accomplished by a lube-debris monitor.

3. A method of reducing pressure in a lube oil system as described in claim 1 including the step of cooling said solid oil.

4. A method of reducing pressure in a lube oil system as described in claim 1 including the step of regulating the pressure in said lube-oil tank.

5. A method of reducing pressure in a lube oil system as described in claim 4 wherein said step of regulating the pressure in said lube-oil tank is accomplished by a pressurizing valve.

6. A method of reducing pressure in a lube oil system as described in claim 1 wherein the step of returning said solid oil to said lube-oil tank is accomplished by providing a separate scavenge oil line.

7. A method of reducing pressure in a lube oil system as described in claim 1 wherein said step of returning said discharge air to said lube-oil tank is accomplished by providing a separate air bypass line.

8. A method of reducing pressure in a lube oil system as described in claim 1 including the step of venting excess air collected in said lube-oil tank.

9. A method of pressurizing a lube-oil system having a lube-oil tank, one or more sumps, one or more scavenge pumps and an air-oil separator, comprising the steps of:
   collecting an air-oil mixture in one or more sumps;
   pumping said air-oil mixture from said one or more sumps to an air-oil separator;
   separating said air-oil mixture into solid oil and discharge air;
   returning said aerated oil to said lube oil tank; and
   returning said discharge air to said lube oil tank.

10. A method of pressurizing a lube-oil system as described in claim 9 wherein said step of separating said air-oil mixture is accomplished by a lube-debris monitor.

11. A method of pressurizing a lube-oil system as described in claim 9 including the step of cooling said aerated oil.

12. A method of pressurizing a lube-oil system as described in claim 9 including the step of regulating the pressure in said lube-oil tank.

13. A method of pressurizing a lube-oil system as described in claim 9 wherein the step of returning said solid oil to said lube-oil tank is accomplished by providing a separate scavenge oil line.

14. A method of pressurizing a lube oil system as described in claim 9 wherein said step of returning said discharge air to said lube-oil tank is accomplished by providing a separate air bypass line.

15. A method of pressurizing a lube oil system as described in claim 12 wherein said step of regulating the pressure in said lube-oil tank is accomplished by a pressurizing valve.

16. A method of pressurizing a lube oil system as described in claim 1 including the step of venting excess air collected in said lube-oil tank.

17. A lube-oil system for a gas turbine system having lube-oil mixed with air comprising:
    a lube-oil tank for supplying lube-oil to bearings and seals;
    one or more sumps for collecting lube-oil drained from and mixed with air by said bearings and seals;
    one or more scavenge pumps for pumping for said lube-oil mixed with air;
    an air-oil separator for separating air from said lube-oil mixed with air into solid oil and discharge air;
    means for returning said solid-oil to said lube-oil tank;
    means for conducting said discharge air to said lube-oil tank without being mixed with said solid oil.

18. A lube-oil system as described in claim 17 wherein said conducting means comprises a bypass air line.

19. A lube-oil system as described in claim 17 wherein said returning means comprises an oil line.

20. A lube-oil system as described in claim 17 wherein said air-oil separator comprises a lube debris monitor.

FIGURE 1

EP 0 513 957 A1

European Patent
Office

**EUROPEAN SEARCH REPORT**

Application Number

EP    92 30 0197

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 725 956 (CUNNINGHAM)<br><br>* column 2, line 3 - line 20; claims; figures * | 1,3-9, 12-19 | F01D25/18<br>F16N39/00<br>F16N7/40 |
| X | US-A-2 755 888 (CUNNINGHAM)<br><br>* column 1, line 53 - column 2, line 7; claims; figures * | 1,3-9, 12-19 | |
| A | US-A-3 316 692 (HUGHES)<br>* column 2, line 25 - line 55; figures * | 1,9,17 | |
| | ----- | | **TECHNICAL FIELDS SEARCHED (Int. Cl.5 )**<br><br>F01D<br>F16N |

The present search report has been drawn up for all claims

| Place of search | Date of completion of the search | Examiner |
|---|---|---|
| THE HAGUE | 20 AUGUST 1992 | SERRANO GALARRAGA J. |

EPO FORM 1503 03.82 (P0401)